# EUROPEAN PATENT APPLICATION

(11) **EP 2 226 771 A1**
(43) Date of publication of application: **08.09.2010**
(21) Application number: 09290155.2
(22) Date of filing: 03.03.2009
(51) Int. Cl.: G07F 7/08, G06Q 20/00

(54) **Money transfer method by prepaid electronic voucher**

(71) Applicant: Zormati, Alexandre Sam, New Rochelle, N.Y. 10805 (US)
(72) Inventor: Zormati, Alexandre Sam, New Rochelle, N.Y. 10805 (US)
(74) Representative: Novagraaf Technologies

(57) **Abstract**

The present invention pertains to a money transfer method by prepaid electronic voucher provided by a financial intermediary of a transaction with a merchant wherein a management server (110) is connected to an intermediary's bank and to a merchant's bank server and to a terminal of the merchant, wherein it comprises
- a preliminary creation step (807) of an electronic voucher to a client;
- a preparation (808) step of money at a point of sale;
- a withdrawn step (809) comprising the transmission of referenced information to the management server (110) via a request transmitted by the terminal;
- a control step (810) at the management server (110) to check the validity of the information,
- a compatibility step (811) implemented by the merchant to check the compatibility of the desired amount with the value associated to the electronic voucher;
- a request step (812) from the merchant to the management server (110);
- a credit step (813) of sending to the intermediary's bank, to credit the bank account of the merchant of an amount corresponding to the amount of money attributed to the client, and
- a step wherein the merchant to give to the client the compatible amount of money.

## Description

The present invention belongs to the field of money transfer.

The present invention belongs more specifically to a money transfer by prepaid electronic voucher.

Classically, transfer money can be implemented between bank entities by means of funds transfer or between a financial service firm (of Western Union™) and a bank by means of money orders.

However, funds transfer required that money providers and receivers have bank accounts. Furthermore, money orders need filling papers and forms that demand costs and time.

To overcome those drawbacks, the invention proposes a transfer by an electronic voucher including a secret code that is created for the money provider and used by the money receiver - the client - via an appropriate platform linked to merchants or points of sale, where the providers can file money and the receivers can withdraw it.

The merchant or the point of sale, where the receivers withdraw money, check that the desired amount of the client is compatible with the amount of money corresponding to the value of the electronic voucher.

More specifically, the invention pertains in its broadest sense to a money transfer method by prepaid electronic voucher provided by a financial intermediary of a transaction with a merchant wherein a management server is connected to an intermediary's bank and to a merchant's bank server and to a terminal of the merchant, wherein it comprises
- a preliminary creation step of an electronic voucher to a client by solding at a first merchant or point of sale an electronic voucher to a client in exchange of an amount equivalent to the value of the electronic voucher;
- a preparation step of money at a point of sale, that can be the same of the first one or a different one, comprising providing referenced information of a secret code, which is written on the electronic voucher, to the merchant by the provider being a client who can be the same or a different one, an identification means, and the desired numeric amount of money that does not overcome the instant amount of the electronic voucher;
- a withdrawn step comprising the transmission of the referenced information to the management server via a request transmitted by the terminal;
- a control step at the management server to check the validity of the code PIN, the numeric amount corresponding to the value associated to the electronic voucher, and the status of the electronic voucher,
- a compatibility step implemented by the merchant to check the compatibility of the desired amount with the value associated to the electronic voucher as transmitted by the management server;
- a request step from the merchant to the management server, this request comprising the amount of money that can be attributed to the client regarding the desired amount compatibility and the client's identification ;
- a credit step of sending to the intermediary's bank, after reception of the request by the management server, an order to credit the bank account of the merchant of an amount corresponding to the amount of money attributed to the client, the client's identification and the flag of the electronic voucher status, the intermediary's bank sends to the management server a confirmation that the bank account of the merchant is credited, and
- a transfer step wherein the management server transmits to the terminal of the merchant this confirmation to enable the merchant to give to the client the compatible amount of money.

According to particular embodiments:
- the preliminary creation step of an electronic voucher comprises :
   ○ a step of sending to the management server of an authorization request through a terminal of the merchant of the point of sale in order to control and debit the account of the merchant of the point of sale through the intermediary's bank;
   ○ a step of generation of data relative to the electronic voucher by the management server, the said data being transmitted to the POS terminal, and
   ○ a step of printing of the electronic voucher by the POS terminal based on the data received;
- the information provided by the client in the preparation step corresponds to personal information of the identification means of the client the code and other information comprise on the electronic voucher;
- the information comprised on the electronic voucher corresponds to the country where the electronic voucher was bought;
- the compatibility is defined regarding the available amount and the merchant charges;
- the terminal is a POS terminal;
- the terminal is an ATM;
- the terminal is a Personal computer;
- the merchant is a bank;
- the numerical format of the client's identity card is recorded in the database of the platform and associated with the reference of electronic voucher in this database, and
- the flag in the credit step, changes status to inactive if the compatibility is no more warranted for the next transaction.

Better understanding of the invention will be obtained from the description presented below for purely explanatory purposes of one mode of implementation of the invention with reference to the attached figures:
- figure 1 illustrates the architecture of the system of recharging prepaid bankcards according to the present invention;
- figure 2 is a modular representation of the management server of the recharging platform of the system of figure 1;
- figure 3 is a flowchart representing the different steps of a process according to the present invention;
- figures 4 and 5 illustrate the information exchanges between different modules of the system during recharge operations;
- figure 6 represents a schematic view of the method according the invention, and
- figure 7 and 8 illustrate two modes of use of the present invention.

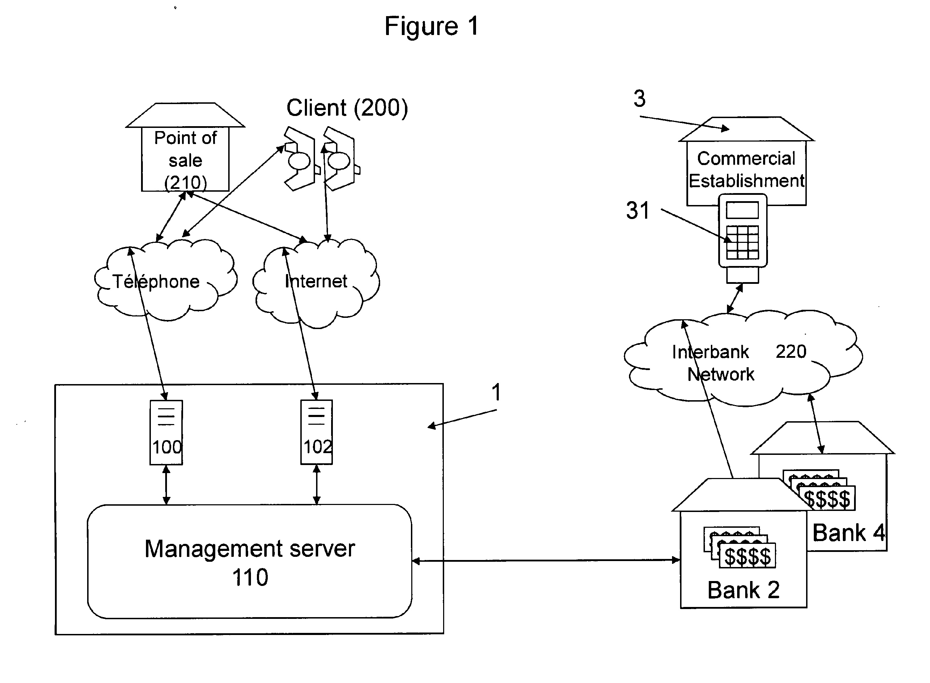

   Figure 1 represents an example of the platform for the implementation of the present invention.

A financial intermediary has available a technical platform 1 for the management of the prepaid payment cards and the electronic voucher that it sells.

This platform is accessible via interactive voice server 100 or via http server 102 connected to the internet network. A management server 110 enables implementation of all of the operations to be discussed below.

A multiplicity of points of sale (210 - tobacco stores, telephone stations, post offices, banks, etc.) and acquisition of payment cards and/or recharge cards for the clients (subscribers) 200 of the financial intermediary have access to the financial intermediary's platform 1 via the telephonic network or the internet.

The management server 110 is connected, preferably by a dedicated fixed link, to its bank 2 which belongs to the worldwide interbank network 220 of the e.g., Visa or MasterCard type (trademarks).

The clients thus can enter a large number of commercial establishments 3 all connected to the worldwide interbank network 220. The merchants' banks 4 are themselves connected to the interbank network in order to validate the transactions implemented by the merchants.

### Payment card

An initial phase allows the final client to acquire a prepaid payment card. In order to do this, the client can use a dedicated web site or a suitable paper form in order to provide his personal information such as last name, first name, address and the type of payment card desired.

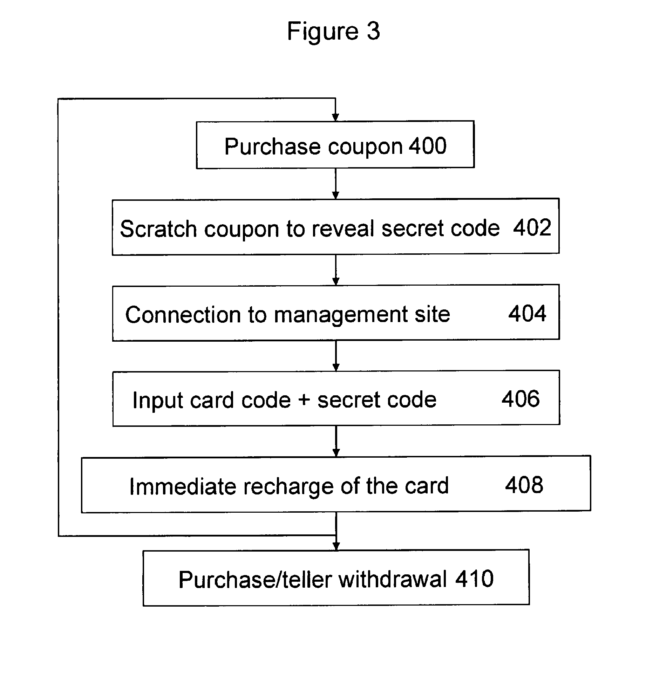

The management server illustrated in figure 3 comprises an authentication server 300, an electronic voucher management server 310, a middle office server for management of the clients' accounts 320 and a processor for the management operations 330.

The financial intermediary records the client's data in a dedicated client database 322 present in the account management server.

A payment card command is then generated by the intermediary to the partner bank 2. The partner bank assigns a unique payment card number.

In one mode of implementation, the payment card has, in addition to its unique number, means for authentication by random. All known technology of the prior art can be employed. These authentication means are associated with a unique number N-N which is stored in a dedicated database 302.

In response, the bank 2 informs the intermediary of the creation of the payment card and communicates to the intermediary the unique numbers of the card and the authentication means. These numbers are also recorded in the database housed in the account management server: a client database 322 for the card number and a database 326 of correspondence between the different numbers associated with a client account and a payment card: payment card number, number N-N, client number (identifier internal to the intermediary's platform).

Upon receiving the payment card as well as the PIN codes for recharging and for use (e.g., for purchases and withdrawals) composed traditionally of four digits, the client activates the card in order to be able to benefit from the recharging services. This activation can, for example, be implemented by the transmission of the recharge PIN code associated with the card. The management server then verifies the correspondence between these two values and, contingent on the results, activates the card.

These payment cards can then be used as traditional payment cards in all of the commercial establishments belonging to the worldwide interbank network: the regulations are applied to the universal terminals (31, figure 1) and according to the same process as for immediate debit payment cards. These cards also allow withdrawals via all types of automated dispensing machines: cash withdrawal is implemented via automated teller machines according to the same process as for immediate debit payment cards.

In one mode of implementation, the accounts associated with the prepaid cards cannot have negative balances, hence the name prepaid card, because the card must contain funds prior to a transaction. These cards are recharged via the intermediary of electronic voucher.

### The electronic voucher

The electronic vouchers comprise a unique identification number and a secret code. This secret code is generally a numeric code composed of 8 to 25 digits, e.g., 8, 9, 10 or 25 digits.

Moreover, the electronic vouchers comprise the name of the society which is the financial intermediary, the name and the address of the merchant (or point of sale) where the electronic vouchers are delivered, date and time of the issue of this electronic voucher by the merchant (or point of sale), and a reference address permitting to the client to connect to the management server for recharging his prepaid card 404. This reference address corresponds for example to a phone number of a voice server 100, an URL (Uniform Resource Locator) of the management Internet server, or a phone number of the management server call centre.

The call centre should preferably be available in the country language and time zone to help the cardholders.
The call centre and the voice server can either be located in the intermediary's bank or merchant's bank.

These electronic vouchers are available and sold to clients possessing a prepaid payment card in all of the points of sale 210 in exchange for a numeric amount equivalent to the predetermined value of the electronic voucher.

The electronic vouchers are sold via the intermediary of all of the points of sale 210 to the client.

Indeed, when the client possessing a prepaid payment card shows up to the point of sale 210, it gives to the merchant (or point of sale) a numeric amount equivalent to the predetermined value of the electronic voucher that it needs to recharge its prepaid payment card.

The merchants of the point of sale use a POS (acronym of point of sale) terminal in order to send an authorization request to the intermediary in order to obtain an electronic voucher.

The authorization request is transmitted through a distributor concentrator to the management server 110, which is connected to the database 312 and to the intermediary's bank.

The data comprised in this request correspond notably to the identity of the POS terminal, information about the point of sale (number of bank account, name of the society, address of this society, etc.), the numeric amount equivalent to the predetermined value of the electronic voucher.

Based on this data the management server 110 asks for financial authorization on the merchant (or point of sale) account to the merchant's bank through the intermediary's bank.

Once, the merchant's account has been controlled, it is debited according to the numeric amount equivalent to the predetermined value of the electronic voucher by the intermediary's bank which send financial authorization to the management server 110.

The management server 110 generates the electronic voucher data which notably comprises a unique identification number and a secret code (code PIN), and others information such as for example: name and the address of the merchant (or point of sale) where the electronic voucher is delivered, date and time of the issue of this electronic voucher by the merchant (or point of sale), and the value associated with the electronic voucher.

The electronic vouchers can be generated beforehand by the management server 110 and stored in the database 312 of the intermediary. Thus, database 312 of the intermediary comprises numbers (identification number and secret code) corresponding to electronic vouchers as well as the value associated with each electronic voucher.

The electronic vouchers have whole-number currency values, e.g., 50 euros, 100 euros, 500 euros, 50 dollars, 100 dollars, etc. This electronic vouchers database 312 is connected to the management processor 330, which itself interfaces with the financial intermediary's bank 2 and with the voice server (or internet server).

Then, the electronic voucher data is sent to the POS terminal. From this electronic voucher data the POS terminal prints the electronic voucher, which is gave to the client. Alternatively, the electronic voucher can be transmitted to any terminal of the client (mobile phone, PDA, personal computer, etc.).

The electronic vouchers database 312 also has means, e.g., in the form of a flag (a Boolean field) indicating the active/inactive status of the electronic vouchers: in contrast to an active electronic voucher, an inactive electronic voucher cannot be credited to a prepayment card.

Once the electronic voucher is printed the client can use it to recharge is prepaid payment card. Thus, the client connects to the management server for recharging his prepaid card 404. This operation can be implemented via a telephone call to a voice server 100: the client calls the telephone number indicated on the electronic voucher and follows the instructions; or via a secure web site: the client connects to the financial intermediary's web site and proceeds to perform the various operations resulting in the recharging of the payment card.

When connected to the management server, the client identifies himself, e.g., by the payment card number, and inputs the secret code (code PIN) of the electronic voucher in order to credit the card with the amount of the purchased electronic voucher 406.

The management server verifies the active/inactive status of the electronic vouchers. If the status is active, the server then proceeds to the recharging 408 of the account of the client associated with the payment card.

Advantageously, the electronic vouchers are distributed and sold on demand, what reduces the cost of implementation of the invention because the intermediary does not have to manufacture for example cards of credit card format which can be used to recharge the payment card.

Moreover, the point of sale does not have to activate the electronic vouchers so that they can be credited to the prepaid accounts when they are purchase by the clients of the financial intermediary.

In a similar manner, the point of sale or any other entity involved in the chain (e.g., financial intermediary) can block or cancel the activation of one or more recharge electronic vouchers. The flag present in the electronic vouchers database 312 is adapted for each of the electronic vouchers as a function of the request formulated by the requestor.

Moreover, the point of sale does not have to advance the money with the customer for the purchase of electronic vouchers. Thus, the point of sale does not have important financial investment to realize in order to distribute the electronic voucher.

In this manner the electronic vouchers are available for sale and ready for recharging prepaid payment cards.

This distribution of electronic voucher corresponds to a preparation step of money at a point of sale, comprising providing referenced information of a secret code, which is written on the electronic voucher, to the merchant by the provider being a client who can be the same or a different one, an identification means, and the desired numeric amount of money that does not overcome the instant amount of the electronic voucher;

In another embodiment, the electronic voucher can be provided by a merchant through a terminal (notebook, personal computer, cell phone, or PDA), connect to internet (connected to bank of the merchant, the management server and a global settlement bank), or a POS terminal as that is previously described.

In another embodiment, the electronic voucher can be provided by a bank based on :
- a POS machine (connected to bank account, to the management server and a global settlement bank),
- a terminal (notebook, personal computer, cell phone, or PDA), connect to internet (connected to bank of the merchant, the management server and a global settlement bank), or
- an ATM (connected to bank and to VISA^{™}, MasterCard^{™} Gateway, to the management server and a global settlement bank).
   When the merchant through POS or computer or the ATM or the terminal requests for an electronic voucher, the request is transmitted to the management server then to the account of the merchant or the ATM who requested it and secure the money and transferred to the settlement intermediary bank with a separated authorization number, then it goes back to the management server to change the status of the flag from inactive to active with value of the requested amount.

### Method for recharging the prepaid payment card

With reference to figure 3, the method for the recharging of a prepaid payment card comprises a first step of purchasing 400 an electronic voucher as described above at a point of sale of the tobacco store, post office, telephone station, etc. type belonging to the approved distribution network. The purchase is made in exchange for a sum of money equivalent to the predefined value of the electronic voucher, this value being the amount that can be recharged on the prepaid payment card by means of this electronic voucher.

This sale enables the automated dispensing machine to recover the funds paid in the purchase of the electronic voucher from the financial intermediary. In this economic model, the money paid by the client who purchases an electronic voucher is virtually stored in the bank account 1).

Once he has purchased the electronic voucher , the client recovers the secret code (code PIN) 402. This code is generally a numeric code composed of 10 to 20 digits, e.g., 10, 12, 14 or 16 digits. It is this code that confirms the uniqueness of the electronic voucher.

The client then connects to the management server for recharging his prepaid card (404). This operation can be implemented via a telephone call to a voice server (100): the client calls the telephone number indicated on the electronic voucher and follows the instructions; or via a secure web site: the client connects to the financial intermediary's web site and proceeds to perform the various operations resulting in the recharging of the payment card.

When connected to the management server 110, the client identifies himself, e.g., by the payment card number, and inputs the secret code of the electronic voucher in order to credit the card with the amount of the purchased electronic voucher 406.

The server then proceeds to the recharging 408 of the account of the client associated with the payment card. This operation is implemented rapidly - on the order of seconds. Thus the funds are immediately available on the payment card.

The payment card the balance of which was credited can then be used for traditional purchase/withdrawal operations 410.

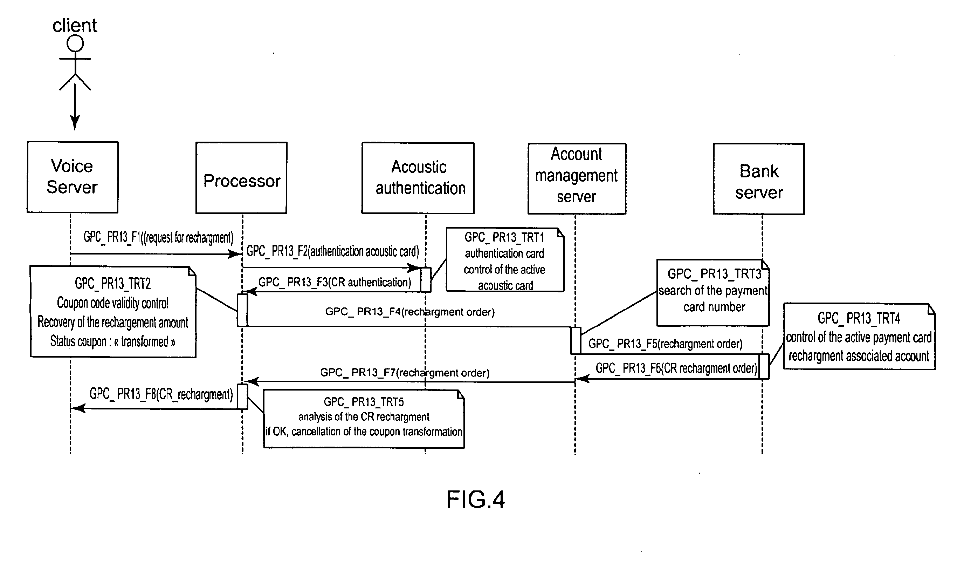

Figure 4 illustrates the process of recharging a payment card by the electronic voucher.

The client who had called the telephone number of the voice server 100 implements a recharge request by the purchased electronic voucher. In order to accomplish this, the client communicates to the management server 330 via the voice server:
- the recharge PIN code of the payment card,
- the secret code comprised on the electronic voucher.

For example, the voice server asks the client to position his card on his telephone in order to play the audio authentication sequence. Once the signal has been correctly transmitted, the voice server asks the client to input his recharge PIN code. During the identification request, the voice server awaits the response by playing holding music. If the recharge PIN code is invalid, the voice server again asks the client to identify himself. Three attempts at identification are permitted before the call is ended. In the case of malfunction of the transaction, the client can be transferred to a technical assistance platform.

The management processor 30) implements the request for authentication of the payment card with the authentication server 300 by communicating to it the recorded sound and recharge PIN code as well as the contextual data (time and date, etc.).

The server 300 implements the authentication of the card by comparing, by means of a software program, the received sound with the number recorded in the database 302 and verifies that the card with the transmitted number is indeed active (information also contained in the database). It then returns an authentication message containing the client number of the card and a successful authentication number. This client number is a unique number used internally on the financial intermediary's platform, e.g., of 5 digits. The client number can be the number N-N when this number is unique, or the unique number of the payment card, or any other number uniquely used for the client reference within the management platform. The correspondence between this client number and the various other numbers (payment number, number N-N) is stored in memory in the correspondences database 326.

The voice server then asks the client to input the electronic voucher number comprised on the electronic voucher. A control of the length of the electronic voucher number is performed by the voice server in order to avoid transaction errors. If the number is correct, the voice server sends a recharge request to the server. In the case of a correct credit, the SVI states the new balance and asks the client to hang up. Confirmation of the transaction by SMS is possible. In the case of an incorrect credit (input error of the electronic voucher number, transaction incident), the voice server transfers the call to a call center.

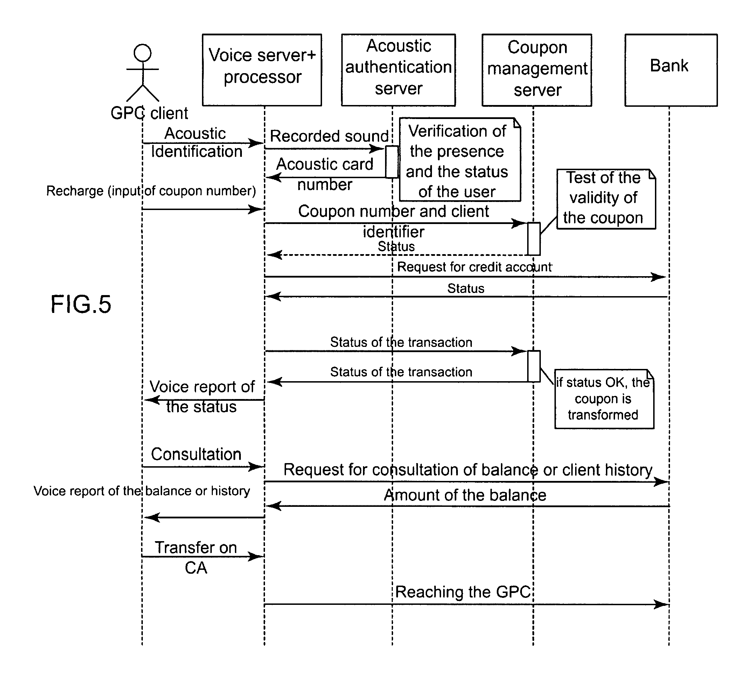

Upon receiving the confirmation of authentication and of the electronic voucher number, the management processor 330 checks the validity of this electronic voucher, recovers the value of the electronic voucher and changes the status of the electronic voucher to "transformed". An electronic voucher is considered to be transformed if when it was active it was used for crediting a payment card. An electronic voucher is considered to be non-transformed if it is active and has not yet been used in the context of a recharge of a prepaid card. As illustrated by figure 5, the validity test of the electronic voucher is implemented by the electronic voucher management processor. This processor searches in its electronic voucher database 312 for the data entry corresponding to the number of the transmitted electronic voucher
- Among other information, the data recorded in this database comprises:
   - electronic voucher number,
   - corresponding value of the electronic voucher,
   - currency,
   - active/inactive status,
   - date of expiration of validity.

In the case of absence, the electronic voucher is considered to be invalid and the client is asked to re-input a number or to terminate the call. If the electronic voucher number is in fact present, the processor verifies the active status of the electronic voucher (if it is not active, e.g., because the electronic voucher was stolen and rendered inactive, the recharge operation is aborted), the date of expiration of validity and recovers the value of the electronic voucher. Finally, the data entry corresponding to the electronic voucher number is made to be "transformed" so that the electronic voucher number cannot permit another card recharge operation. This "transformation" can be simply implemented by the removal of the corresponding entry of the database 312.

Following this "transformation", the processor emits an order to recharge the payment card by communicating to the account management server 320:
- a transaction number,
- the client number of the card,
- the amount of the recharge,
- the currency of the recharge.

The server comprises a first client database 322 comprising at least the fields:
- personal information on the client (last name, first name, address, etc.),
- active/inactive status.
- unique number of the payment card,
- balance of the associated account.

And a second database 326 of the correspondences between the payment card numbers and the client numbers placed on the payment cards.

The account management server determines the payment card number by means of the transmitted client number (database 326) then credits the balance of the account associated with this card with the amount of recharging transmitted in the appropriate currency if the card has an active status.

The recharge order is then transmitted to the bank 2, which transmits to the interbank network the information such as that the payment card has a new balance. Since in certain interbank networks, a payment card transaction does not require verification of the status of the associated account but is based solely on the payment possibilities associated with the card, this transmission to the entire interbank network is important: it can thereby enable updating of the payment possibilities relative to the card.

By cascade, a return is implemented subsequent to the recharge order from the bank servers updating the interbank network to the voice server passing via the processor which validates the correct progression; if this is not the case, the "transformed" updating of the electronic voucher is cancelled if the recharging was not implemented. The return messages contain:
- transaction number,
- client number of the payment card,
- new account balance,
- currency,
- date of the expiration of the credit.

In order to cancel the "transformation", the server moves the eligible electronic voucher back to the status that preceded the transformed state. The changing of status of the electronic voucher s is stored in an archive. The archived data are the series number, the status, the date of status change, the reference of the point of sale and the identifier of the user who implemented the request.

Once the information has been input by the client, the authentication cycle, validation of the card and electronic voucher, recharging of the account, transmission of the information onto the interbank network and the return of confirmation is estimated to take several seconds, essentially less than two seconds. The dimensioning of the network links, the processors, the cell formats of the transmitted data is defined such that the constraint of a cycle less than two seconds is respected up to peaks of eight million simultaneous recharges.

In another embodiment, the redeem of the electronic voucher to prepaid payment card or bankcard is realized by :
- call IVR put card number follow the instruction press on the number for loading, and
- put the electronic voucher number press "#" at this point the IVR is connected to the management server in order to :
   - to verify the status of the card,
   - to verify the status of the electronic voucher,
   - to change the status of the E-voucher from active to load to card number XXXXXXXXXXX, and
   - to give the information to the settlement intermediary bank to load the card XXX.

### Transfer of money at the point of sale (or merchant)

Based on the electronic voucher, the client can withdraw money at the point of sale from the reception of the electronic voucher by any means of communication transmitted by the client provider (phone call, e-mail, etc.).

Indeed, when the client shows up at the point of sale 210, it gives to the merchant :
- the secret code (code PIN) which is written on the electronic voucher;
- an identification means, e.g. its identity card or a password or any other personal means, and optionally
- the desired numeric amount of money that does not overcome the instant amount of the electronic voucher..

The merchant prints on a terminal the personal information of the identification means of the client (last name, first name, address, birth date...), the code PIN and optionally other information comprised on the electronic voucher (for example the country where the electronic voucher was bought).

The terminal of the merchant (for example the POS terminal) is notably connected to the dedicated web site 102 (figure 1) and the management server 110 (figure 1) of the platform of the intermediary 1 (figure 1).

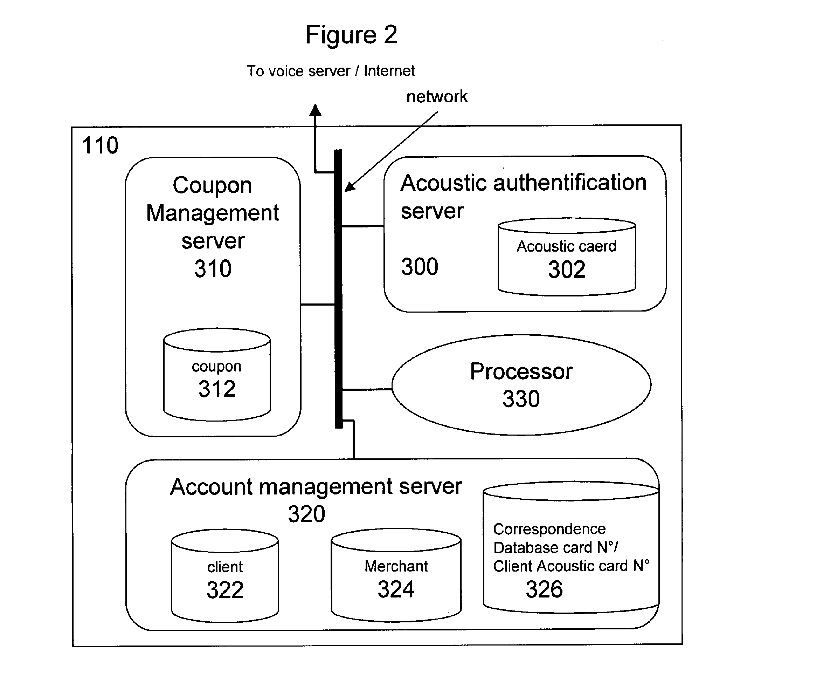

The different information which are printed on the terminal by the merchant are sent to the management server 110 (figure 2) through a request transmitted by the terminal.

The management server 110 (figure 1) controls:
- the validity of the code PIN;
- the numeric amount corresponding to the value associated which the electronic voucher, and
- the flag (a Boolean field) indicating the active/inactive status of the electronic voucher: in contrast to an active electronic voucher, an inactive electronic voucher cannot be used to provide an amount of money to the client.

In order to respond to this request, the management server 110 (figure 1) transmits, in a step 815, data to the terminal of the merchant corresponding to the numeric amount associated with the electronic voucher when this electronic voucher is active. Otherwise, the data informs that the numerical amount is null and the management server 110 (figure 1) transmits to the merchant terminal that the electronic voucher is inactive.

The merchant checks that the desired amount of the client is compatible with the amount of money corresponding to the value of the electronic voucher, and sends a request to the management server 110 (figure 1) via the terminal in case of compatibility. This compatibility is defined regarding the available amount and the merchant's charges.

This request comprises the amount of money that can be attributed to the client regarding the desired amount, and the numerical format of the client's identification means.

When the management server 110 (figure 1) receives this request:
- it send to the intermediary's bank an order to credit the bank account of the merchant of an amount corresponding to the amount of money attributed to the client in a step 816;
- the numerical format of the client's identification is recorded in the database and associated with the reference of electronic voucher in this database, and
- the flag (a Boolean field) changes status the electronic voucher to inactive if the compatibility is no more warranted for the next transaction.

The intermediary's bank sends to the management server 110 (figure 1) a confirmation of that the bank account of the merchant is credited, in a step 818.

The management server 110 (figure 1) transmits to the terminal of the merchant this confirmation in a step 814, and the merchant gives to the client the desired amount of money, in a step 819.

In another embodiment, the redeem of the electronic voucher from the merchant is realized based on :
- a POS machine (connected to bank account, to the management server 110 and a global settlement bank),
- a terminal (notebook, personal computer, cell phone, or PDA), connect to internet (connected to bank of the merchant, the management server 110 and a global settlement bank).

In another embodiment, the redeem of the electronic voucher from the bank is realized based on :
- a POS machine (connected to bank account, to the management server 110 and a global settlement bank),
- a terminal (notebook, personal computer, cell phone, or PDA), connect to internet (connected to bank of the merchant, the management server 110 and a global settlement bank), or
- an ATM (connected to bank and to VISA^{™}, MasterCard^{™} Gateway, to the management server 110 and a global settlement bank).
   When the merchant through the POS terminal, personal computer or the ATM asks for redeem an electronic voucher it's going to the management server 110 then to the account of the merchant or the ATM who requested it and secure the money and transferred from the settlement intermediary bank to the bank or to the merchant bank account who requested with separated authorization number, then its go back to the management server 110 to change the status from active to redeem in cash with value of the requested amount.

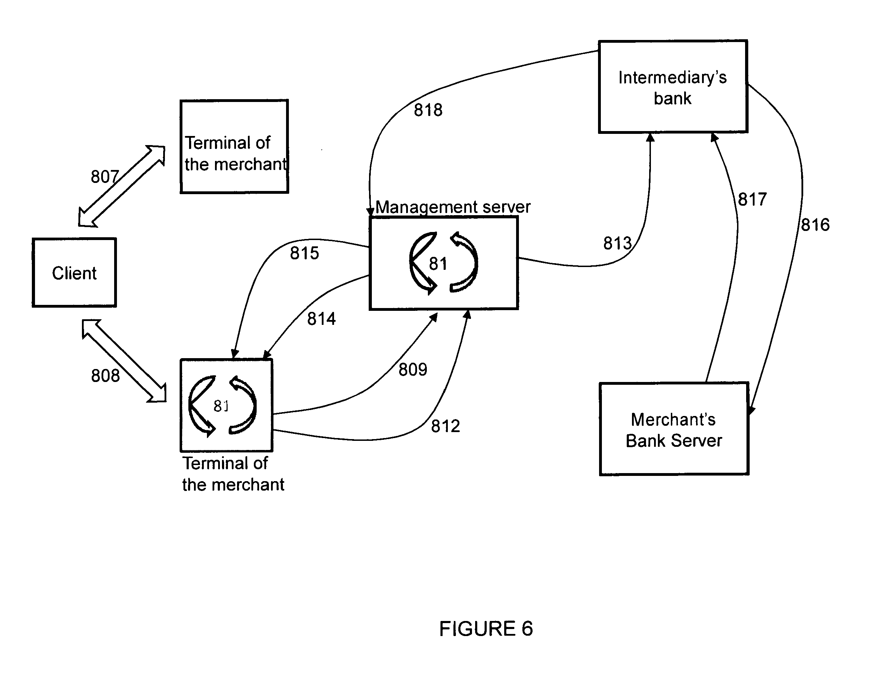

In the figure 6, the method of money transfer by prepaid electronic voucher is provided by a financial intermediary of a transaction with a merchant wherein a management server 110 is connected to an intermediary's bank and to a merchant's bank server and to a terminal of the merchant.

The terminal corresponds for example to an ATM, a POS terminal, Personal Computer, notebook or a PDA.

In this method, a preliminary step 807 corresponds to creation of an electronic voucher to a client by solding at a first merchant or point of sale an electronic voucher to a client in exchange of an amount equivalent to the value of the electronic voucher.

After this preliminary step 807, the method comprises a preparation step 808 of money at a point of sale, that can be the same of the first one or a different one, comprising providing referenced information of a secret code, which is written on the electronic voucher, to the merchant by the provider being a client who can be the same or a different one, an identification means, and the desired numeric amount of money that does not overcome the instant amount of the electronic voucher.

Then, the method anticipates these following steps :
- a withdrawn step 809 comprising the transmission of the referenced information to the management server 110 via a request transmitted by the terminal;
- a control step 810 at the management server 110, by a control server, to check the validity of the code PIN, the numeric amount corresponding to the value associated to the electronic voucher, and the status of the electronic voucher,
- a compatibility step 811 implemented by the merchant to check the compatibility of the desired amount with the value associated to the electronic voucher as transmitted by the management server 110 in a step 815;
- a request step 812 from the merchant to the management server 110, this request comprising the amount of money that can be attributed to the client regarding the desired amount compatibility and the client's identification ;
- a credit step 813 of sending to the intermediary's bank, after reception of the request by the management server 110, an order to credit the bank account of the merchant of an amount corresponding to the amount of money attributed to the client, the client's identification and the flag of the electronic voucher status, by sending a request to the merchant's bank in a step 816.
- a step of confirmation 817 by the merchant's bank of the credit of the merchant's account, by sending a confirmation request to the intermediary's bank. Then the intermediary's bank sends to the management server 110 a confirmation that the bank account of the merchant is credited in a step 818, and
- a transfer step 814 wherein the management server 110 transmits to the terminal of the merchant this confirmation to enable the merchant to give to the client the compatible amount of money, in a step 819.
   In another embodiment, the step of confirmation 817 by the merchant's bank of the credit of the merchant's account, can be realized by sending a confirmation request to the management server.

### Other functionalities

The voice server provides numerous other services: blockage of lost electronic voucher s/cards, balance consultation, information on the last account operations, transmission of the lost recharge/use PIN codes of a payment card and all other types of services.

The platform also comprises call centers for information, technical incidents, loss or theft, etc.

The financial intermediary is a bank, a private company, etc.

The present invention can also be used by companies for recharging the payment cards for the professional expenses of its employees: the company makes available to its employees a set of nominative prepaid payment cards and a expenses/requirements function of each implements a recharging of the cards via an internet interface and the recharge numbers (electronic voucher s). The employees thus have available the necessary funds for their professional expenses.

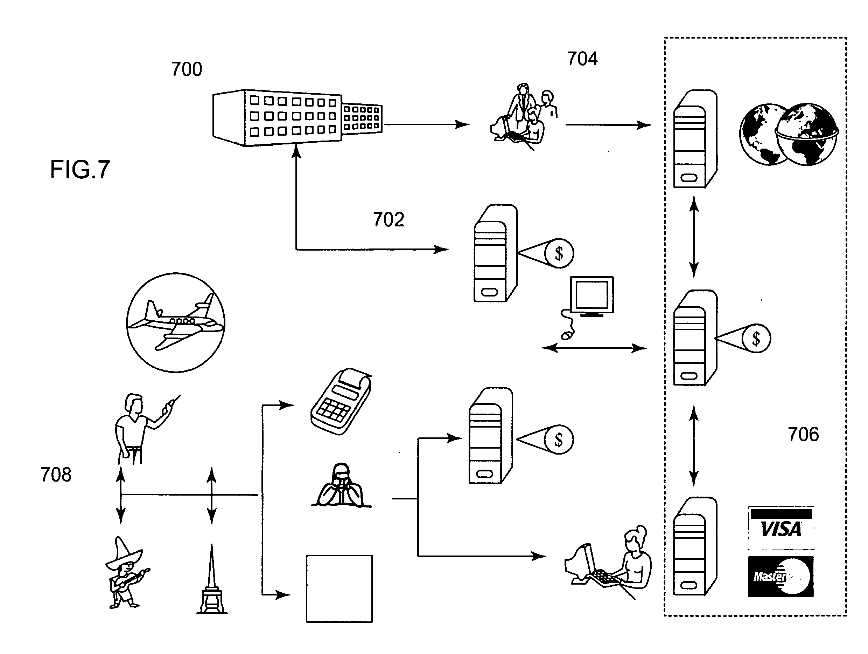

With reference to figure 7, the company 700 credits 702 its own account from which will be deducted the professional expenses of the employees of a predefined amount that it authorizes as expense for the employee with his prepaid payment card. The company so informs 704 its bank, which transmits the information to the Visa/MasterCard (trademarks) interbank network. The payment cards of the beneficiaries are credited 706 by the predefined amount from bank to bank on the interbank network.

At the end of the chain, the employees 708 can use their prepaid bank cards on their business trips.

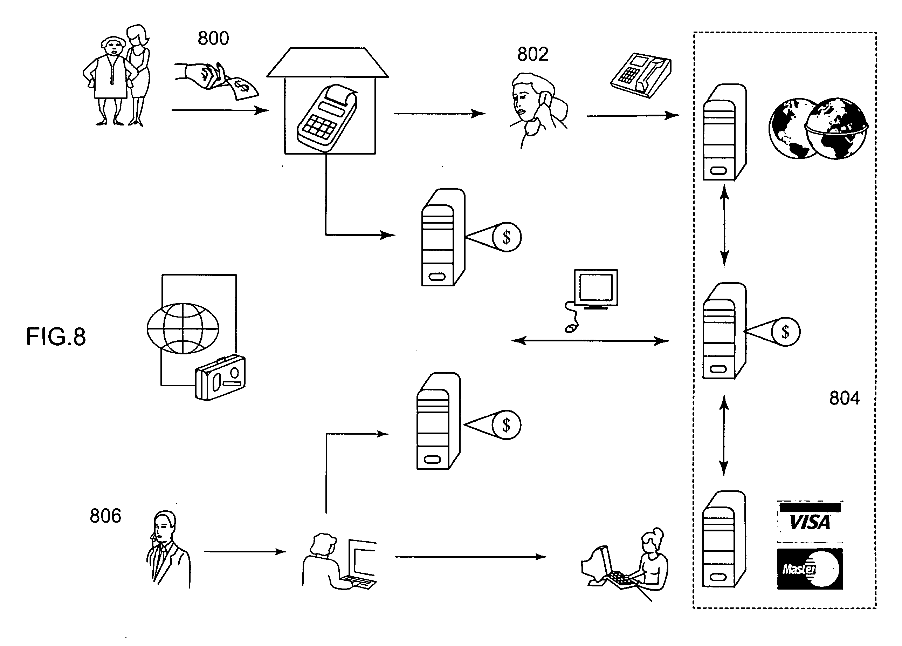

Figure 8 illustrates the use of the present invention in the context of money transfer.

The clients purchase 800 electronic voucher s of a value of X euros and telephone 802 the recharge management server. The financial intermediary's platform verifies the status of the electronic voucher s and payment card to be recharged then sends the request for crediting the payment card 804. This request disseminates the information on the entire interbank network and credits the card held, e.g., by a family member at the other end of the globe 806. This person can then spend the X euros in his country by the intermediary of the payment card.

The present invention can also apply to concepts such as telephone and electricity bills.

## Claims

1. Money transfer method by prepaid electronic voucher provided by a financial intermediary of a transaction with a merchant wherein a management server (110) is connected to an intermediary's bank and to a merchant's bank server and to a terminal of the merchant, **characterized in that** it comprises :
- a preliminary creation step (807) of an electronic voucher to a client by solding at a first merchant or point of sale an electronic voucher to a client in exchange of an amount equivalent to the value of the electronic voucher;
- a preparation step (808) of money at a point of sale, that can be the same of the first one or a different one, comprising providing referenced information of a secret code, which is written on the electronic voucher, to the merchant by the provider being a client who can be the same or a different one, an identification means, and the desired numeric amount of money that does not overcome the instant amount of the electronic voucher;
- a withdrawn step (809) comprising the transmission of the referenced information to the management server (110) via a request transmitted by the terminal;
- a control step (810) at the management server (110) to check the validity of the code PIN, the numeric amount corresponding to the value associated to the electronic voucher, and the status of the electronic voucher,
- a compatibility step (811) implemented by the merchant to check the compatibility of the desired amount with the value associated to the electronic voucher as transmitted by the management server (110);
- a request step (812) from the merchant to the management server (110), this request comprising the amount of money that can be attributed to the client regarding the desired amount compatibility and the client's identification ;
- a credit step (813) of sending to the intermediary's bank, after reception of the request by the management server (110), an order to credit the bank account of the merchant of an amount corresponding to the amount of money attributed to the client, the client's identification and the flag of the electronic voucher status, the intermediary's bank sends to the management server (110) a confirmation that the bank account of the merchant is credited, and
- a transfer step (814) wherein the management server (110) transmits to the terminal of the merchant this confirmation to enable the merchant to give to the client the compatible amount of money.

2. Money transfer method according to claim 1,wherein the preliminary creation step of an electronic voucher comprises :
- a step of sending to the management server (110) of an authorization request through a terminal of the merchant of the point of sale in order to control and debit the account of the merchant of the point of sale through the intermediary's bank;
- a step of generation of data relative to the electronic voucher by the management server (110), the said data being transmitted to the terminal, and
- a step of printing of the electronic voucher by the terminal based on the data received.

3. Money transfer method according to claims 1 or 2, wherein the information provided by the client in the preparation step corresponds to personal information of the identification means of the client the code and other information comprise on the electronic voucher.

4. Money transfer method according to claim 3, wherein the information comprised on the electronic voucher corresponds to the country where the electronic voucher was bought.

5. Money transfer method according to one of claims 1 to 4, wherein the compatibility is defined regarding the available amount and the merchant's charges.

6. Money transfer method according to one of claims 1 to 5, wherein the client's identification in the request step corresponds to an identity card of the client which is in a numerical format.

7. Money transfer method according to claim 6, wherein the numerical format of the client's identity card is recorded in the database (312) of the platform and associated with the reference of electronic voucher in this database (312).

8. Money transfer method according to one of claims 1 to 6, wherein the flag in the credit step, changes status to inactive if the compatibility is no more warranted for the next transaction.

9. Money transfer method according to one of claims 1 to 8, wherein the terminal is a POS terminal.

10. Money transfer method according to one of claims 1 to 8, wherein the terminal is an ATM.

11. Money transfer method according to one of claims 1 to 8, wherein the terminal is a personal computer connected on the Internet.

12. Money transfer method according to one of claims 1 to 11, wherein the merchant is a bank.
